# EUROPEAN PATENT APPLICATION

(11) **EP 0 653 317 A1**
(43) Date of publication of application: **17.05.1995**
(21) Application number: 94203101.4
(22) Date of filing: 26.10.1994
(51) Int. Cl.: B60C 11/18, B60C 11/00

(54) **Bicycle tyre**

(30) Priority: 16.11.1993 NL 9301974
(71) Applicant: Vredestein Fietsbanden B.V., NL-7005 AL Doetinchem (NL)
(72) Inventor: Slaaf, Jacob Fredericus, NL-7313 BL Apeldoorn (NL)
(74) Representative: Lips, Hendrik Jan George, Ir.

(57) **Abstract**

Bicycle tyre comprising a carcass of two steel wires (1) having canvas (2) wound thereon, and a tread (3) of rubber fitted onto the canvas. The tread (3) is composed of adjacent portions (4, 5) of rubber having different properties and extending in circumferential direction of the tyre. In particular if the tyre is provided with studs, the side portions (5) of the tread (3) will be manufactured from a harder type of rubber than the middle portion (4) of the tread. The softer type of rubber will have a hardness of 30 to 55°sha and the harder type of rubber will have a hardness of 55 to 80°sha.

## Description

The invention relates to a bicycle tyre comprising a carcass of particularly two wires of steel or a similar material having canvas wound onto them, with a tread of rubber being attached to the canvas.

A soft or a hard type of rubber must be selected as material for the tread of the tyre. A soft type of rubber has a better grip on a somewhat plane road, on which one will also often ride, but is less wear resistant.

When the tyre is meant for riding across rough, slanting and irregular terrains and loose ground, the tyre will be provided with studs for obtaining a best possible grip of the tyre on the ground. This applies in particular to riding on loose ground, on irregularities or on riding across a slope and in bends. At such times, the side studs are loaded laterally.

When the tread is manufactured of a soft type of rubber, on will obtain a good contact between the tyre and the road when riding across a substantially plane road. However, the studs will yield stronger and thus be less effective when riding across loose ground and the like as indicated above. This will also apply to the studs at the side of the tread, which in particular must perform their functions on riding across slopes.

Up to now, with the manufacture of bicycle tyres one therefore has had to compromise in the selection of the type of rubber for the tread.

The object of the invention is to design a bicycle tyre of the type described above in such a way, that it can optimally perform its functions.

To that end, according to the invention it is provided for, that the tread is composed of adjacent portions extending in circumferential direction of the tyre and being of rubber having different properties.

With bicycle tyres meant for riding across rough, slanting and irregular terrains, the adjacent portions of the tread will in particular be of rubber having different hardnesses.

In particular, it will be provided for that the side portions of the tread are manufactured from a harder type of rubber than the middle portion of the tread.

When riding across a slope in loose ground, the outer studs will then optimally perform their functions, since they will not or hardly yield.

For a soft type of rubber, rubber having a hardness of 30 to 60°sha is considered, and for a harder type of rubber, a hardness of 50 to 80°sha.

Even if the bicycle tyre is not provided with studs, but is meant for a normal touring bicycle or a racing bicycle, applying the invention can give advantages.

According to the invention, the middle portion of the tread can thus be manufactured from rubber having a low internal friction, and the side portions from rubber having a high friction between road and tyre.

By manufacturing the middle portion from rubber having a low internal friction in the way as indicated, the hysteresis causing energy losses and thus the rolling resistance will be low. By manufacturing the side portions from rubber having a high friction between road and tyre, one can ride through bends at higher speeds. The latter is of course particularly important with racing bicycles.

The invention is further explained by means of embodiments, illustrated in the drawing, in which:
Fig. 1 shows a diagrammatical cross-section of a bicycle tyre according to the invention at a given stage of its manufacture;
Fig. 2 shows a cross-section of the bicycle tyre of Fig. 1, but after it has undergone the last treatment; and
Fig. 3 shows a cross-section corresponding to Fig. 2 but of a somewhat modified embodiment of a bicycle tyre according to the invention.

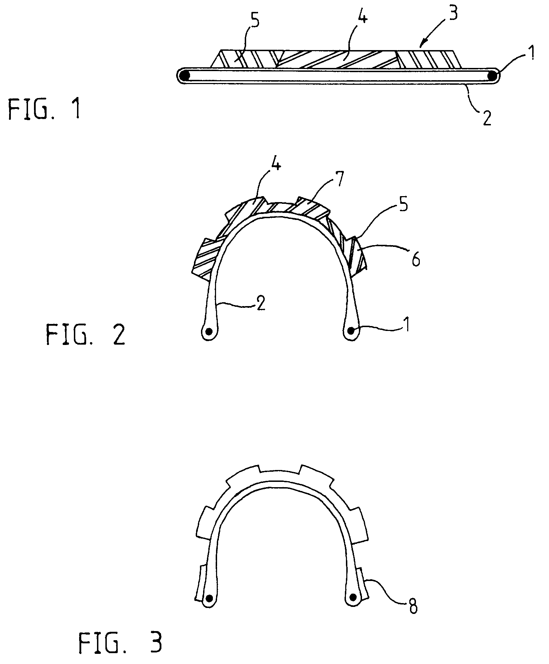

As shown in Fig. 1, a bicycle tyre is composed of two steel wires 1 across which the canvas is applied, in particular by winding canvas threads onto the steel wires over an angle in transverse direction. This winding takes place in a flat state.

The tread 3 is applied onto the canvas 2, said tread according to the invention being of a soft type of rubber for the middle portion 4 and a hard type of rubber for the side portions 5. The rubber is then not yet vulcanized and therefore not retaining its shape.

Subsequently, the entirety is brought into a heated mould so that the tyre will take up the shape as shown in Fig. 2. In this shape the rubber is vulcanized, so that it obtains the desired properties. The tread of the tyre is provided with the studs 6 and 7 in the same way. Therein, the studs 6 will consist of rubber having a greater hardness than the rubber of the studs 7.

The rubber of the two components of the tread 3 will be chemically connected to the canvas 2 by vulcanization so that an optimal adherence will be achieved.

The bicycle tyre shown in Fig. 3 corresponds substantially to that of Fig. 2. Only additional reinforcement strips 8 have been applied to protect the canvas against possible sharp edges of the rim on which the bicycle tyre is fitted.

It will be obvious that only some possible embodiments of a bicycle tyre according to the invention have been illustrated in the drawing and described above and that many modifications can be made without being beyond the inventive idea.

Thus, obviously the construction of the bicycle tyre can be changed and for example the rubber of the tread can extend beyond the position of the steel wires. It is not necessary that the bicycle tyre is provided with studs; it could have a normal profile for use on common touring bicycles and racing bicycles and the types of rubber used for the tread can have other specific properties.

All these possibilities will be clear to the expert and will need no further explanation.

## Claims

1. Bicycle tyre comprising a carcass of particularly two wires (1) of steel or a similar material having canvas (2) wound onto them, with a tread (3) of rubber being attached to the canvas, characterized in that the tread (3) is composed of adjacent portions (4, 5) extending in circumferential direction of the tyre and being of rubber having different properties.

2. Bicycle tyre according to claim 1, characterized in that the adjacent portions (4, 5) of the tread (3) consist of rubber having different hardnesses.

3. Bicycle tyre according to claim 2, characterized in that the side portions (5) of the tread (3) of the tyre are manufactured from a harder type of rubber than the middle portion (4) of the tread (3).

4. Bicycle tyre according to claim 2 or 3, characterized in that the soft type of rubber has a hardness of 30 to 55°sha and that the harder type of rubber has a hardness of 55 to 80°sha.

5. Bicycle tyre according to one or more of the preceding claims, characterized in that the middle portion (4) of the tread (3) is manufactured from rubber having a low internal friction and that the side portions (5) are manufactured from rubber having a high friction between road and tyre.
